# EUROPEAN PATENT APPLICATION

(11) **EP 2 385 595 A2**
(43) Date of publication of application: **09.11.2011**
(21) Application number: 11163878.9
(22) Date of filing: 27.04.2011
(51) Int. Cl.: H02B 1/20

(54) **Integrated electricity distribution arrangement**

(30) Priority: 04.05.2010 FI 20105483
(71) Applicant: Ensto Finland Oy, 06101 Porvoo (FI)
(72) Inventor: Haataja, Mikko, 50100, Mikkeli (FI); Kilpeläinen, Jari, 01490, Vantaa (FI); Marttinen, Jukka, 50600, Mikkeli (FI)
(74) Representative: LEITZINGER OY

(57) **Abstract**

The object of the invention is an integrated arrangement for distributing electricity comprising a transforming station (100) for transforming electrical energy to suitable mode for a distribution area. The arrangement for distributing electricity comprises means (102) for routing and distributing in series feed from the transforming station (100) for routing the distribution of electricity to at least one series feed route, the means (102) for routing and distributing being arranged at least partly integrated to a first electricity distribution unit (104), which comprises connecting cabling (106) between the electricity distribution unit (104) and an electricity consuming unit (108), and the electricity distribution unit (104) comprises in a part related to the electricity consuming unit a measurement unit (110) of the electricity consuming unit (108). The electricity distribution unit (104) comprises in a electricity distribution part in series feed means (102) for routing and distributing to at least one similar electricity distribution unit (104), and one of said following electricity distribution unit(s) (104) comprises in series feed means (102) for routing and distributing back to said transforming station (100).

## Description

### Background of the invention

Electricity distribution for example in urban communities is arranged by electricity distribution arrangements, which comprise transforming stations, electrical cable lines between transforming stations and buildings and necessary measurement and control centres of electricity distribution.

### State of the art

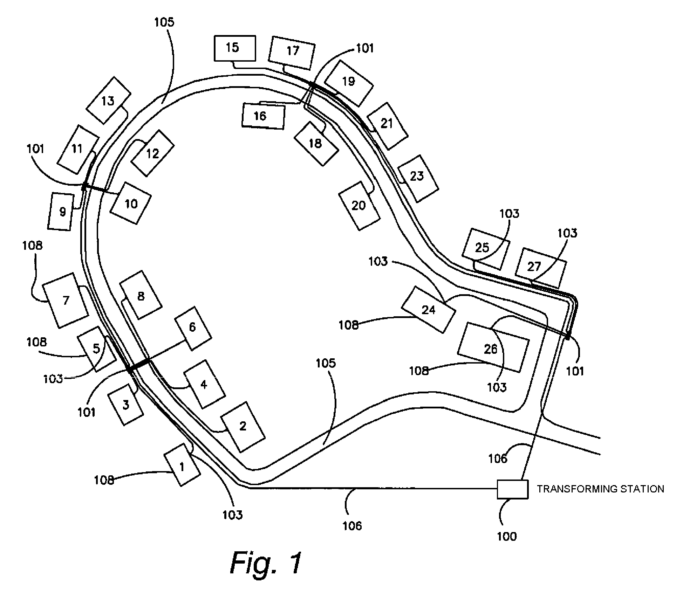

In figure 1 is presented electricity distribution arrangement according to the state of the art, which arrangement comprises cabling for electrical distribution from the transforming station 100 to street distribution units 101. A typical electricity distribution area is an area of detached houses in urban community. The street distribution unit comprises a routing centre of cables and electronics needed for example to all detached houses 108 of the entire street. From the street distribution unit is cabled through a dug route the cable for electricity distribution separately for each detached house 108, and each detached house has own measurement unit centre 103 for electricity distribution. Reference sign 105 marks street routings of the area of detached houses, and signs 1-27 inside the detached houses are order numbers of the detached houses. The needed cabling amount in the area of detached houses grows thus considerably much. Because cable material is expensive, is the described matter a concrete economical drawback. The need of separate dug works for cable lines of the detached houses 108 is also a drawback.

When a new detached house is introduced to the electricity distribution arrangement according to the state of the art, a representative of energy department needs normally visit the location I) when the cable is connected to the street distribution unit 101, II) when the cable is connected to the measurement unit centre 103, and III) when the detached house is connected to the electricity distribution arrangement. In the arrangement according to the state of the art is also not possible to implement centralized control of electricity distribution from the energy department. This means that when a malfunction exists in the electrical network, it is not possible to obtain detached house specific information by the centralized control to get to know in what detached house the malfunction exists, and thus the representative of energy department must visit the street distribution units to find out, where the malfunction exists, and after said street distribution unit is found, there must be an inspection to find out in what detached house the malfunction exists.

### Short description of the invention

The object of the invention is to implement an arrangement for distributing electricity between several buildings, which arrangement minimizes cabling costs and work phases and makes control of electricity distribution more efficient. This is achieved by an integrated arrangement for distributing electricity comprising a transforming station for transforming electrical energy to suitable mode for a distribution area, and means for routing and distributing in series feed from the transforming station for routing the distribution of electricity to at least one series feed route, the means for routing and distributing being arranged at least partly integrated to a first electricity distribution unit. The first electricity distribution unit comprises connecting cabling between the first electricity distribution unit and an electricity consuming unit to form an independent pair from each electricity distribution unit and electricity consuming unit, and the electricity distribution unit comprises in a part related to the electricity consuming unit a measurement unit of the electricity consuming unit to measure and control consumption of electricity in said electricity consuming unit to form an independent pair from each electricity distribution unit and electricity consuming unit, and the electricity distribution unit comprises in a electricity distribution part in series feed means for routing and distributing to at least one similar independent pair of electricity distribution unit and electricity consuming unit, and one of said following electricity distribution unit(s) comprises in series feed means for routing and distributing back to said transforming station, and the arrangement for distributing electricity comprises a centralized control unit to perform centralized control of electricity distribution of the electricity consuming units in said series feed electricity distribution route independently to each electricity consuming unit based on said independent pairs of the electricity distribution units and the electricity consuming units.

The invention is based on independent pairs of electricity distribution units and electricity consuming units by using connecting cabling between each electricity distribution unit and each electricity consuming unit and a measurement unit located in each electricity distribution unit, said measurement unit being electricity consuming unit specific. The invention is also based on at least partly integrating to the electricity distribution units together with measurement units of the electricity consuming units means for routing and distributing performing said series feeding, said integration being implemented so that the electricity distribution unit comprises in series feed means for routing and distributing to at least one similar electricity distribution unit, and one of said following electricity distribution unit(s) comprises in series feed means for routing and distributing back to said transforming station thereby accomplishing said loop of electricity distribution.

The benefit of the invention is that because of the loop mode electricity distribution the distances to be cabled substantially shorten, and thus considerable savings are achieved in cable material costs and in digging work costs. The series feed electricity distribution enables also to implement a centralized and effective control of electricity distribution to areas of the electricity distribution loops. A significant benefit is also achieved in work phases where a electricity consuming unit is introduced to the arrangement for distributing electricity, a representative of energy department needs normally visit only once the electricity distribution unit of the electricity consuming unit according to the invention, whereas in the electricity distribution arrangement according to the prior art there is the average need for even three separate visits to the electricity consuming unit.

### List of figures

- Figure 1: presents prior art arrangement for distributing electricity.
- Figure 2: presents an arrangement for distributing electricity according to the preferred embodiment of the invention.
- Figure 3: presents an electricity distribution unit according to the preferred embodiment of the invention.

### Detailed description of the invention

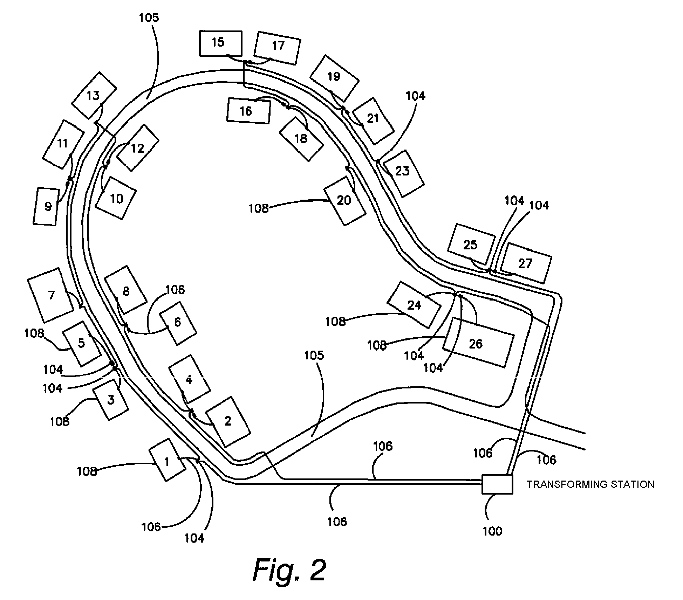

In figure 2 is presented an arrangement for distributing electricity according to the preferred embodiment of the invention. In the transforming station 100 electrical energy is transformed by one or more transformer(s) to 230 V, 50 Hz electricity mode to be distributed to the distribution area. Electricity distribution is arranged from the transforming station 100 in series feed by means 102 for routing and distributing, which comprise cabling needed for conducing electricity from the transforming station 100 to the consumer of electricity, and means for routing for routing the electricity distribution , i.e. cabling, and control electronics. Part of the means 102 for routing and distributing can locate at the transforming station, where is possible to locate one or several other means for routing and distributing for the other arrangements accordingly that in the following description will be described for independent series feed electricity distribution routes. Reference sign 105 marks street routings of the area of detached houses.

In embodiments according to the invention the means 102 for routing and distributing are arranged at least partly integrated to electricity distribution units 104. There can be several electricity distribution units in the route of series feed electricity distribution. The means 102 for routing and distributing can also be in practice entirely integrated to the electricity distribution units 104 excluding cablings which connect the transforming station 100 and electricity distribution units 104 and electricity consuming units 108. The means 102 for routing and distributing thus also comprise connecting cablings 106 from the electricity distribution unit 104 to the electricity consuming unit 108, which is for example a detached house of the urban community. Signs 1-27 inside the detached houses are order numbers of the detached houses. In the preferred embodiment of the invention the electricity distribution unit is detached house specific. The electricity distribution unit comprises in series feed means 102 for routing and distributing, i.e. means for routing and connecting cabling 106 to at least one similar electricity distribution unit 104 of the following detached house.

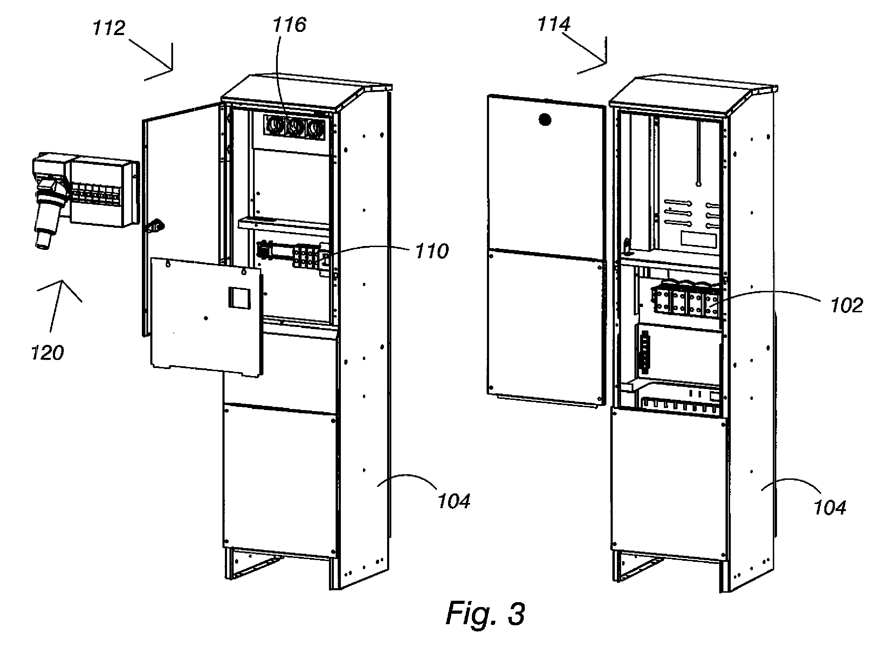

In figure 3 is presented an electricity distribution unit 104 according to preferred embodiment of the invention, which electricity distribution unit comprises a first side 112, which belongs to a user of the electricity consuming unit 108, i.e. the detached house, and a second side 114, which belongs to the control of the electricity distribution, i.e. belongs to the energy department. Said first and second side are separated by locking means so that both the user of the detached house and the representative of the energy department has access only to his/her own side. In the first side 112 locates the measurement unit 110 of electricity consumption of the detached house, which measurement unit comprises fuses and control electronics to control electricity consumption. In the second side 114 locates a control unit of the energy department, which is connected to the measurement unit 110, the control unit controlling electricity consumption of the detached house to perform centralized control of electricity distribution in said series feed electricity distribution route. A centralized control unit locates for example in the energy department to perform centralized control of control units of all electricity distribution units 104. Wireless signal transmission arrangement can be arranged between the centralized control unit and control units of electricity distribution units, for example GSM data transmission, to perform centralized control of electricity distribution. For example introducing of night time electricity can be controlled from the energy department via said GSM connection to the electricity distribution unit and via the distribution unit to the detached house.

An electricity distribution unit 104 (figure 3) according to the preferred embodiment of the invention comprises a wall socket adapter 116 integrable to the first side 112, i.e. to the side of detached house, and the user can select the wall socket adapter 116 on the basis of the user's demand. For example during building process of the detached house a wall socket adapter 116 can be a three phase power wall socket for building machines, and said socket can be changed to a single phase light wall socket, 230 V, 50 Hz. In the preferred embodiment of the invention the electricity distribution cabinet, i.e. the electricity distribution unit 104 is assembled during the building process so that cabling is performed below the electricity distribution unit 104 and the cable is dug to ground, and only visible is a commissioning head 120 of the cable, and because of the locking means in the electricity distribution unit 104 said head is only usable to the user of the detached house 108. In the first side of the electricity distribution cabinet can thus also locate a main switch of electricity use in the detached house.

The representative of the energy department visits once the electricity distribution unit 104, when the detached house is connected to the electrical network. Said one visit is enough to make sure that the electricity distribution unit 104 of said detached house is ready to be introduced to electrical network.

When is propagated in the series feed, i.e. in the ring feed electricity distribution (figure 2) to the last electricity distribution unit, said series feed, i.e. ring feed is continued from the last electricity distribution unit to the same transforming station 100, from which the electricity distribution arrangement has begun. By this way has been introduced centralized controllable electricity distribution loop, where every detached house 108 is with through its own electricity distribution cabinet 104. Electricity distribution units 104 of detached houses can really locate physically close to each other, as presented in figure 2, but important is that they are independent units to the detached houses 108 of the electricity distribution loop, and there is a detached house specific centralized control of electricity consumption for example from the energy department, and the electricity consumption of them can also be controlled in detached house specific manner in said centralized control arrangement. This enabled by said new mode loop structure of electricity distribution, where the monitored and controlled electricity consuming units 108 are in said control loop as independent units.

Main thoughts of the invention can be realized with an electricity distribution arrangement comprising different variations, where as electricity consuming units 108 can be also row houses, office buildings, block of apartments, holiday cottages, etc.

Although the invention has been presented in reference to the attached figures and specification, the invention is by no means limited to those as the invention is subject to variations within the scope allowed for by the claims.

## Claims

1. Integrated arrangement for distributing electricity comprising a transforming station (100) for transforming electrical energy to suitable mode for a distribution area, and means (102) for routing and distributing in series feed from the transforming station (100) for routing the distribution of electricity to at least one series feed route, the means (102) for routing and distributing being arranged at least partly integrated to a first electricity distribution unit (104), **characterized by** that the first electricity distribution unit (104) comprises connecting cabling (106) between the first electricity distribution unit (104) and an electricity consuming unit (108) to form an independent pair from each electricity distribution unit (104) and electricity consuming unit (108), and the electricity distribution unit (104) comprises in a part related to the electricity consuming unit a measurement unit (110) of the electricity consuming unit (108) to measure and control consumption of electricity in said electricity consuming unit (108) to form an independent pair from each electricity distribution unit (104) and electricity consuming unit (108), and the electricity distribution unit (104) comprises in a electricity distribution part in series feed means (102) for routing and distributing to at least one similar independent pair of electricity distribution unit (104) and electricity consuming unit (108), and one of said following electricity distribution unit(s) (104) comprises in series feed means (102) for routing and distributing back to said transforming station (100), and the arrangement for distributing electricity comprises a centralized control unit to perform centralized control of electricity distribution of the electricity consuming units (108) in said series feed electricity distribution route independently to each electricity consuming unit based on said independent pairs of the electricity distribution units and the electricity consuming units.

2. Integrated arrangement for distributing electricity according to claim 1, **characterized by** that the arrangement for distributing electricity comprises wireless signal transmission arrangement between the measurement unit (110) and the centralized control unit to perform centralized control of electricity distribution.

3. Integrated arrangement for distributing electricity according to claim 1, **characterized by** that the electricity distribution unit (104) comprises a first side (112), which belongs to a user of the electricity consuming unit (108), and a second side (114), which belongs to the control of the electricity distribution, and the first and second side being separated by locking means.

4. Integrated arrangement for distributing electricity according to claim 3, **characterized by** that the electricity distribution unit (104) comprises a wall socket adapter (116) integrable to the first side (112), and the user of the electricity consuming unit (108) selects the wall socket adapter (116) on the basis of the user's demand.

5. Integrated arrangement for distributing electricity according to claim 1, **characterized by** that the electricity consuming unit (108) is a separate residential building or a part of a residential building.

6. Integrated arrangement for distributing electricity according to claim 1, **characterized by** that the electricity distribution unit (104) comprises said means (102) for routing and distributing as integrated means and in the measurement unit (110) fuses and control electronics to control electricity distribution.

7. Integrated arrangement for distributing electricity according to claim 1, **characterized by** that the arrangement for distributing electricity comprises in series feed the electricity distribution unit (104) of said integrated arrangement for distributing electricity, and person who controls electricity distribution visits once the electricity distribution unit, when the electricity consuming unit (108) connected via connecting cabling (106) to said electricity distribution unit is introduced to the electricity distribution of the arrangement for distributing electricity.
